# EUROPÄISCHE PATENTSCHRIFT

(11) **EP 2 911 992 B1**
(45) Veröffentlichungstag und Bekanntmachung des Hinweises auf die Patenterteilung: **23.11.2016**
(21) Anmeldenummer: 13821073.7
(22) Anmeldetag: 22.10.2013
(51) Int. Cl.: C04B 26/14, C08L 63/00

(54) **REAKTIONSHARZ-ZUSAMMENSETZUNG UND DEREN VERWENDUNG**
REACTION RESIN COMPOSITION AND USE THEREOF
COMPOSITION DE RÉSINE DE RÉACTION ET SON UTILISATION

(30) Priorität: 24.10.2012 DE 102012219479
(43) Veröffentlichungstag der Anmeldung: 02.09.2015
(73) Patentinhaber: Hilti Aktiengesellschaft, 9494 Schaan (LI)
(72) Erfinder: PFEIL, Armin, 86916 Kaufering (DE); KUMRU, Memet-Emin, 86199 Augsburg (DE)
(86) Internationale Anmeldenummer: PCT/EP2013/072069
(87) Internationale Veröffentlichungsnummer: WO 2014/064103

(56) Entgegenhaltungen:
- EP-A1- 2 357 162

## Beschreibung

Die vorliegende Erfindung betrifft eine Hybridreaktionsharz-Zusammensetzung, insbesondere eine Reaktionsharz-Zusammensetzung auf Basis einer radikalisch härtbaren Verbindung und eines Epoxidharzes sowie deren Verwendung zur chemischen Befestigung von Verankerungsmittel in Bohrlöchern.

Die Verwendung von Reaktionsharzmischungen auf der Basis von ungesättigten Polyesterharzen, Vinylesterharzen einerseits und auf der Basis von Epoxidharzen andererseits als Klebe- und Haftmittel, ist seit langem bekannt. Es handelt sich dabei im Allgemeinen um Zweikomponentensysteme, wobei eine Komponente die Reaktionsharzmischung und die andere Komponente das Härtungsmittel für das Harz enthält. Andere, übliche Bestandteile, wie Füllmittel, Beschleuniger, Stabilisatoren, Lösungsmittel einschließlich Reaktivlösungsmittel (reaktive Verdünner), können in der einen und/oder der anderen Komponente enthalten sein. Durch Vermischen der beiden Komponenten wird dann die Reaktion unter Bildung eines gehärteten Produktes in Gang gebracht.

Insbesondere für die chemische Befestigungstechnik, z.B. Dübelmassen, werden hohe Anforderungen an die Reaktivharzmassen gestellt, da bei dieser Anwendung die mechanische Stärke, die Haftung an mineralischen Untergründen und auch an anderen Untergründen, wie Glas, Stahl und dergleichen, sehr gut sein müssen. Eine Größe für die Beurteilung der mechanischen Stärke und der Hafteigenschaften ist der sogenannte Auszugstest. Ein niedriger Auszugswert, auch Lastwert genannt, weist auf geringe Zugfestigkeit und geringe Haftung am Untergrund hin. Bei Verwendung von Reaktivharzmassen als organisches Bindemittel für Mörtel- und/oder Dübelmassen müssen auch unter strengen Bedingungen hohe Lastwerte erreicht werden, wie bei niedrigen und bei hohen Temperaturen.

Grundsätzlich kommen in der chemischen Befestigungstechnik zwei Systeme zum Einsatz. Eines auf Basis radikalisch polymerisierbarer, ethylenisch ungesättigter Verbindungen, die in der Regel mit Peroxiden gehärtet werden, und eines auf Epoxid-Amin-Basis. Das erste System zeichnet sich durch eine schnelle Aushärtung, insbesondere bei tiefen Temperaturen (-10°C) aus und sind hinsichtlich der Lastwerte, insbesondere bei erhöhten Temperaturen, wie etwa +80°C, vorteilhaft, weist jedoch einen nicht zu vernachlässigenden Schrumpf auf. Dem gegenüber weisen die Epoxid-Amin-Systeme zwar eine langsamere Aushärtung, insbesondere bei niedrigen Temperaturen (+5°C) auf und Schwächen bei den Lastwerten, insbesondere bei erhöhten Temperaturen, wie etwa +80°C, weisen jedoch einen wesentlich geringeren Schrumpf auf.

Um die Vorteile der beiden Systeme zu vereinen, laufen Entwicklungen dahingehend, dualhärtende Bindemittel zu entwickeln. Dies bedeutet, Systeme, deren Aushärtung sowohl radikalisch als auch durch Polyaddition erfolgt. Diese werden auch Hybridsysteme oder Hybridbindemittel genannt. Diese Hybridsysteme basieren allgemein auf Harzzusammensetzungen, die nach einem ersten Reaktionstyp härtbare Verbindungen, zum Beispiel radikalisch polymerisierbare Verbindungen, und nach einem zweiten, von dem ersten Reaktionstyp unterschiedlichen Reaktionstyp härtbare Verbindungen, wie Verbindungen, die durch Polyaddition polymerisieren, zum Beispiel Epoxide, enthalten. Eine Harzzusammensetzung auf Basis einer radikalisch polymerisierbaren Verbindung und eines Epoxids lassen sich beispielsweise mit einem Peroxid und einem Amin härten.

Es ist bisher nicht gelungen, die beiden klassischen Systeme zu einem einfachen und anwendungsfertigen Hybridsystem zu vereinen, ohne die klassischen Systeme von ihrer Formulierung her signifikant anzupassen bzw. abzuändern, und damit eine Verschlechterung gewisser, wesentlicher Eigenschaften (wie Lagerstabilität, Reaktivität bei hohen oder niedrigen Temperaturen, etc.) in Kauf nehmen zu müssen.

Aus der EP 10153243 A1 ist eine Reaktionsharzmörtel-Zusammensetzung auf Basis eines Hybridbindemittels bekannt. Das Hybridbindemittel basiert auf einem System mit einer Harzkomponente, die ein radikalisch härtbares Harz und ein Epoxidharz umfasst, und mit einer Härterkomponente, die ein aliphatisches Amin und ein Peroxid umfasst. Diese Reaktionsharzmörtel-Zusammensetzung weist jedoch einige Nachteile auf.

Nachteilig an dieser Reaktionsharzmörtel-Zusammensetzung ist, dass die radikalische Polymerisation mit dem Peroxid als Initiator mit einem Beschleuniger auf Basis eines Metallsalzes aktiviert werden muss, damit die radikalische Polymerisation bei Raumtemperatur und insbesondere bei tiefen Temperaturen bis zu -10°C initiiert wird. Dieser Beschleuniger ist gemäß der EP 10153243 A1 in der Harzkomponente enthalten, welche die radikalisch härtbare Verbindung enthält.

Ein weiterer Nachteil dieser Reaktionsharzmörtel-Zusammensetzung ist ferner, dass eine zusätzliche Verbindung erforderlich ist, die zwei funktionelle Gruppen trägt, wovon eine radikalisch (co)polymerisieren kann und die zweite mit einem Amin reagieren kann, eine sogenannte verbrückende Verbindung, um neben der Tieftemperaturhärtung die Eigenschaften der ausgehärteten Masse bei tiefen Temperaturen zu verbessern. Es hat sich herausgestellt, dass erst mit dieser verbrückenden Verbindung zufriedenstellende Lastwerte bei tiefer Temperatur erreicht werden können.

Ferner ist nachteilig, dass die Gelzeit der Reaktionsharzmörtel-Zusammensetzung nur mit stabilen Nitroxylradikalen verlängert werden kann, da mit den neben den Nitroxylradikalen eingesetzten üblichen Inhibitoren eine Gelzeitverlängerung nicht möglich ist.

Dies führt zu weiteren Problemen. Den Harzen bzw. den Harzkomponenten werden häufig Verbindungen zugesetzt, welche eine vorzeitige, das heißt bei Lagerung, radikalische Polymerisation verhindern, um diese lagerstabil zu machen. Ein übliche und bewährte Verbindung ist 4-Hydroxy-2,2,6,6-tetramethylpiperidin-1-oxyl (Tempol), welches unter anderem auch dazu verwendet wird, die Gelzeit eines radikalisch härtenden, ungesättigten Harzes auf einen gewünschten Wert einzustellen. Es wird jedoch angenommen, dass bei der Reaktionsharzmörtel-Zusammensetzung gemäß der EP 10153243 A1 zumindest zur Einstellung der Gelzeit zugegebenes Tempol relativ schnell abgebaut wird, was dazu führt, dass eine dauerhafte Verlängerung der Gelzeit nicht möglich ist und ein Gelzeitdrift beobachtet wird. Aus der Literatur (z.B. Sheldon et al., Org. Biomol. Chem., 2003, 1, 3232; E.G. Rozantsev et al., Russ. Chem. Rev., 1971, 40 (3), 233) gibt es Hinweise, dass Tempol mit Cu(I)- und Cu(II)-Salzen, welche unter anderem als Katalysator für die Aktivierung des Peroxidhärters eingesetzt werden, vor allem in Gegenwart von Luftsauerstoff mit OH-funktionellen Substanzen (wie sie auch in den üblichen Reaktionsharzmischungen enthalten sind) reagiert. Es wird eine schnelle Oxidationsreaktion bei Raumtemperatur angenommen. Diese Zersetzungsreaktion wird auch für andere stabile Nitroxylradikale angenommen.

Die Aufgabe der Erfindung ist daher, ein Reaktionsharz-System, insbesondere Injektionssystem, für die chemische Befestigung bereitzustellen, das die genannten Nachteile nicht aufweist, das insbesondere einfach aus der Kombination der bekannten Reaktionsharz-Systeme erhalten werden kann und demnach ein einfache Zusammensetzung aufweist, ohne dass die Eigenschaften der einzelnen Reaktionsharz-Systeme negativ beeinflusst werden.

Die Aufgabe wird durch eine Reaktionsharz-Zusammensetzung mit den Merkmalen des Anspruchs 1 gelöst.

Der Erfindung lag der Gedanke zugrunde, die bereits für die unterschiedlichen Einsatzbereiche bekannten und vielfach verwendeten Injektionsmörtel und damit ihre Eigenschaften, insbesondere ihre Vorteile zu kombinieren und als anwendungsfertiges Injektionssystem zu konfektionieren.

Zum besseren Verständnis der Erfindung werden die folgenden Erläuterungen der hierin verwendeten Terminologie als sinnvoll erachtet. Im Sinne der Erfindung bedeuten:
- *"Härter"* Stoffe, welche die Polymerisation (das Härten) des Grundharzes bewirken;
- *"Beschleuniger"* eine zur Beschleunigung der Polymerisationsreaktion (Härtung) fähige Verbindung, die dazu dient, die Bildung des Radikalstarters zu beschleunigen;
- *"Stabilisator"* eine zur Inhibierung der Polymerisationsreaktion (Härtung) fähige Verbindung, die dazu dient, die Polymerisationsreaktion und damit ein unerwünschtes vorzeitiges Polymerisieren der radikalisch polymerisierbaren Verbindung während der Lagerung zu vermeiden; diese Verbindungen werden üblicherweise in so geringen Mengen eingesetzt, dass die Gelzeit nicht beeinflusst wird;
- *"Inhibitor"* ebenfalls eine zur Inhibierung der Polymerisationsreaktion (Härtung) fähige Verbindung, die dazu dient, den Start der Polymerisationsreaktion unmittelbar nach der Zugabe des Härtungsmittels zu verzögern; diese Verbindungen werden üblicherweise in solchen Mengen eingesetzt, dass die Gelzeit beeinflusst wird;
- *"Reaktivverdünner"* flüssige oder niedrigviskose Monomere und Grundharze, welche andere Grundharze, den Harz-Masterbatch oder die Harzmischung verdünnen und dadurch die zu deren Applikation notwendige Viskosität verleihen, zur Reaktion mit dem Grundharz befähigte funktionelle Gruppen enthalten und bei der Polymerisation (Härtung) zum überwiegenden Teil Bestandteil des gehärteten Masse (Mörtel) werden.
- *"Gelzeit"* für ungesättigte Polyester- oder Vinyl-Harze, die gewöhnlich mit Peroxiden gehärtet werden, entspricht die Zeit der Härtungsphase des Harzes der Gelzeit, in der sich die Temperatur des Harzes von +25°C auf +35°C erhöht. Dies entspricht in etwa dem Zeitraum, in dem sich die Fluidität oder Viskosität des Harzes noch in so einem Bereich befindet, dass das Reaktionsharz bzw. die Reaktionsharzmasse noch einfach ver- bzw. bearbeitet werden kann;
- *"Gelzeitdrift"* (für einen bestimmten ausgewählten Zeitraum, zum Beispiel 30 oder 60 Tage), bezeichnet das Phänomen, dass, wenn die Härtung zu einem anderen Zeitpunkt als zu dem Referenz-Standardzeitpunkt der Härtung, beispielsweise 24 Stunden nach der Herstellung des Reaktionsharzes, bzw. der Reaktionsharzmasse, die beobachtete Gelzeit von der zum Zeitpunkt der Referenz abweicht;
- *"Zweikomponenten-Mörtelsystem"* wird ein System bezeichnet, das zwei voneinander getrennt gelagerte Komponenten, im Allgemeinen eine Harz- und eine Härterkomponente, umfasst, so dass eine Härtung des Reaktionsharzmörtels erst nach dem Mischen der beiden Komponenten erfolgt;
- *"Dreikomponenten-Mörtelsystem"* wird ein System bezeichnet, das drei voneinander getrennt gelagerte Komponenten umfasst, so dass eine Härtung des Reaktionsharzmörtels erst nach dem Mischen der drei Komponenten erfolgt;
- *"Epoxidwert'* der Anzahl der Mole der Epoxidgruppen in 100g Harz (im Folgenden auch als nEP bezeichnet);
- *"Doppelbindungswert"* der Anzahl der Mole der Doppelbindungsgruppen bzw. Doppelbindungen in 100 g Harz (im Folgenden auch als nDB bezeichnet);
- "(*Meth*)*acryl*.../...(*meth*)*acryl*...", dass sowohl die "Methacryl.../...methacryl..."- als auch die "Acryl.../...acryl... "-Verbindungen umfasst sein sollen.

Ein erster Gegenstand der Erfindung ist eine Reaktionsharz-Zusammensetzung mit einem Harzbestandteil (A), der mindestens eine radikalisch härtbare Verbindung (a-1) und mindestens ein Epoxidharz (a-2), das im Durchschnitt mehr als eine Epoxidgruppe pro Molekül enthält, enthält, und einem Härterbestandteil (B), der ein Härtungsmittel für die mindestens eine radikalische Verbindung (b-1) und mindestens ein Amin (b-2) enthält, wobei die Verbindungen (a-1) und (b-1) sowie die Verbindungen (a-2) und (b-2) jeweils reaktionsinhibierend räumlich getrennt voneinander sind.

Die radikalisch härtbare Verbindung (a-1) und das Epoxidharz (a-2) können dabei nicht in einem beliebigen Verhältnis zueinander vorliegen. Überraschend und nicht vorhersehbar war, dass nur bei bestimmten Verhältnissen von radikalisch härtbarer Verbindung (a-1) und Epoxidharz (a-2) härtbare Zusammensetzungen mit zufriedenstellenden Eigenschaften erhalten werden. Dabei muss entweder der Gesamtanteil der radikalisch polymerisierbaren funktionellen Gruppen oder der Gesamtanteil der Epoxid-Gruppen in der Zusammensetzung im Überschuss vorliegen.

Erfindungsgemäß liegt daher das Verhältnis von Doppelbindungswert zu Epoxidwert nDB:nEP in der Zusammensetzung zwischen 0,01 und 0,55, bevorzugt zwischen 0,01 und 0,30, besonders bevorzugt zwischen 0,01 und 0,25, oder zwischen 5 und 50, bevorzugt zwischen 7 und 50, besonders bevorzugt zwischen 10 und 50.

Überwiegt der Gesamtanteil der Epoxidgruppen in der Zusammensetzung, liegt also das Verhältnis nDB:nEP im Bereich von 0,01 und 0,55, können Lastwerte erreicht werden, die im Bereich eines Epoxid-Amin-Systems liegen. Dabei sind die Aushärteeigenschaften besser als die eines Epoxid-Amin-Systems und vergleichbar mit einem System auf Basis radikalisch polymerisierbarer Verbindung bzw. des aus der EP 10153243 A1 bekannten Systems.

Überwiegt der Gesamtanteil der radikalisch polymerisierbaren funktionellen Gruppen in der Zusammensetzung, liegt also das Verhältnis nDB:nEP im Bereich von 5 bis 50, können Lastwerte erreicht werden, die im Bereich des aus der EP 10153243 A1 bekannten Hybridsystems liegen und etwas besser sind als die eines reinen Systems auf Basis radikalisch polymerisierbarer Verbindungen. Überraschender Weise sind dabei die Aushärteeigenschaften bei tiefen Temperaturen (-5°C) deutlich besser als bei dem Vergleichshybridsystem sowie bei den reinen Einzelsystemen, d.h. das System auf Basis radikalisch polymerisierbarer Verbindungen und das System auf Basis von Verbindungen, die mit einem Amin reagieren können.

Bei dem erfindungsgemäßen System ist weder eine Übergangsmetallverbindung noch eine verbrückende Verbindung, wie sie in der EP10153243 A1 für die Härtung zwingend erforderlich sind, erforderlich, damit eine zufriedenstellende Aushärtung beobachtet wird und Eigenschaften des ausgehärteten Masse erhalten werden. Dementsprechend enthält erfindungsgemäß die Zusammensetzung keine Cu-, Mn- und Eisenverbindung und keine verbrückende Verbindung.

Folglich ist es gelungen, ein Hybridbindemittel bereitzustellen, mit dem Reaktionsharz-Zusammensetzungen mit verbesserten Eigenschaften erhalten werden, verglichen mit sowohl dem Vergleichshybridsystem als auch mit den Einzelsystemen, dem System auf Basis radikalisch polymerisierbarer Verbindung und dem auf Basis von Verbindungen, die mit einem Amin reagieren können.

Wird versucht, die Reaktionsharzmörtel-Zusammensetzung der EP 10153243 A1, als anwendungsfertiges System zu verpacken, ergeben sich weitere Schwierigkeiten.

Bei den bekannten Zweikomponentensystemen ist es üblich, die entsprechenden Komponenten so aufzuteilen, dass der Harzbestandteil und der Härterbestandteil räumlich getrennt verpackt sind, damit erst eine Reaktion stattfindet, wenn die beiden Bestandteile miteinander in Kontakt gebracht werden. Bei einer üblichen Zweikomponenten-Verpackung, wie die Verpackung in Kartuschen oder Foliengebinden, ist der Harzbestandteil in einer ersten Kartusche oder einem ersten Folienbeutel und der Härterbestandteil in einer davon räumlich getrennten zweien Kartusche oder einem zweiten Folienbeutel verpackt. Ähnlich ist dies bei den ebenfalls verwendeten Patronen der Fall, wobei eine kleinere Patronen, welche den Härterbestandteil enthält, in einer größeren Patrone, welche den Harzbestandteil enthält, angeordnet ist. Bei einer Kartusche als Verpackung enthält diese üblicherweise zwei getrennte Kammern, um eine räumlich Trennung der Bestandteile zu erreichen.

Für eine Hybrid-Zusammensetzung, wie sie in der EP 10153243 A1 beschrieben ist, würde in einem Zweikammer-System der Harzbestandteil, der in einer Kammer enthalten ist, die radikalisch härtbare Verbindung, das Epoxidharz, Katalysatoren, Beschleuniger, gegebenenfalls Reaktivverdünner, Inhibitoren und eine Verbindung zur Brückenbildung enthalten. Der Härterbestandteil würde dann die beiden Härtungsmittel, das Peroxid und das Amin, enthalten. Auf der Härterseite ergibt sich das Problem, dass nur wenige Peroxide und Amine kurzzeitig lagerstabil kombiniert werden können. Das heißt, es ist keine Flexibilität bezüglich der Auswahl vor allem der Aminhärter für das Epoxidharz gegeben. Ferner kann eine ausreichende Lagerstabilität selbst bei solchen Härtungsmitteln, die miteinander kombiniert werden können, nicht gewährleitstet werden. Dies führt unweigerlich zu einer nicht berechenbaren Beeinträchtigung der Aushärtung und der Leistungsfähigkeit der Bindemittel, d.h. der Verbundfestigkeit der Verankerungselemente. Aber auch auf der Harzseite muss, wie oben bereits erläutert, mit Problemen aufgrund einer Reaktion der Einzelkomponenten untereinander gerechnet werden.

Die Erfinder haben herausgefunden, dass dies dadurch gelöst werden kann, wenn die bereits aus dem Stand der Technik bekannten Zweikomponenten-Systeme auf Basis radikalisch härtbarer Verbindungen und Peroxiden als Härtungsmittel und die bekannten Zweikomponenten-Systeme auf Epoxid-Amin-Basis zu einem Dreikomponenten-System zusammengeführt werden, wobei der Harz- und der Härterbestandteil so aufgeteilt werden, dass die radikalisch härtbare Verbindung in einer ersten Komponente, das Epoxidharz zusammen mit dem Peroxid in einer zweiten Komponente und das Amin in einer dritten Komponente enthalten ist, wobei die drei Komponenten räumlich getrennt voneinander sind, so dass eine Härtung der beiden Harze erst nach dem Vermischen aller Bestandteile erfolgt.

Eine bevorzugte Ausführungsform der Erfindung ist daher, bei der oben beschriebenen Reaktionsharz-Zusammensetzung die Verbindungen (a-1), (a-2), (b-1) und (b-2) derart auf drei Komponenten aufzuteilen, dass eine erste Komponente (I) die Verbindung (a-1) enthält, eine zweite Komponente (II) die mindestens eine Verbindung (a-2) und das Härtungsmittel (b-1) enthält und eine dritte Komponente (III) das mindestens eine Amin (b-2) enthält, und die drei Komponenten (I), (II) und (III) reaktionsinhibierend räumlich getrennt voneinander sind.

Hierdurch konnte das aus der EP 10153243 A1 bekannte Hybridsystem durch die Verringerung der Anzahl der erforderlichen Bestandteile und das Erreichen größerer Freiheitsgrade bei der Formulierung der Reaktionsharzmörtel-Zusammensetzung deutlich vereinfacht werden, so dass es gelungen ist, die bekannten langsam und schnellhärtenden Systeme ohne Anpassungen der Formulierungen zu kombinieren. Außerdem konnte erreicht werden, dass die Gelzeit nicht nur mit stabilen Nitroxylradikalen sondern auch mit den bekannten anderen Inhibitoren eingestellt werden kann. Zudem liegen die Eigenschaften, wie die Tieftemperatureigenschaft der Mörtelmasse und der damit erreichten Lastwerte im Bereich der aus der EP 10153243 A1 bekannten Systeme. Insbesondere ist weder eine Verbindung, die zwei funktionelle Gruppen trägt, wovon eine radikalisch (co)polymerisieren kann und die zweite mit einem Amin reagieren kann, noch ein Beschleuniger auf Basis von Metallsalzen erforderlich, um vergleichbare Eigenschaften der ausgehärteten Mörtelmasse zu erreichen.

Erfindungsgemäß werden das Härtungsmittel für die radikalisch härtbare Verbindung (b-1), wie etwa ein Peroxid, und das Epoxidharz (a-2) miteinander kombiniert. Dies hat den Vorteil, dass das Epoxidharz auch als Phlegmatisierungsmittel für das Peroxid dient und daher auf weitere (in der Regel inerte, d.h. weichmachende) Verbindungen zur Phlegmatisierung des Peroxids, welche gegebenenfalls die vorteilhaften Eigenschaften der ausgehärteten Zusammensetzung beeinträchtigen können, verzichtet werden kann.

Ein weiterer Vorteil der erfindungsgemäßen Reaktionsharz-Zusammensetzung ist, dass beliebige Amine (b-2) als Härtungsmittel für das Epoxidharz (a-2) und beliebige Peroxide als Härtungsmittel (b-1) für die radikalisch härtbare Verbindung (a-1) eingesetzt werden können. Hierdurch wird eine größtmögliche Gestaltungsfreiheit bei der Wahl der Härtungsmittel erhalten, so dass diese einfach entsprechend den jeweiligen Anforderungen und unabhängig voneinander an die Zusammensetzung ausgewählt werden können.

Ferner ist von Vorteil, dass man nicht auf bestimmte Inhibitoren zur Einstellung der Gelzeit beschränkt ist und die Inhibitoren aus den bekannten Verbindungen ausgewählt werden können.

Als radikalisch härtbare Verbindungen (a-1) sind erfindungsgemäß ethylenisch ungesättigte Verbindungen, Verbindungen mit Kohlenstoff-Kohlenstoff-Dreifachbindungen und Thiol-Yn/En-Harze geeignet, wie sie dem Fachmann bekannt sind.

Von diesen Verbindungen ist die Gruppe der ethylenisch ungesättigten Verbindungen bevorzugt, die Styrol und Derivate davon, (Meth)acrylate, Vinylester, ungesättigte Polyester, Vinylether, Allylether, Itaconate, Dicyclopentadien-Verbindungen und ungesättigte Fette umfasst, wovon insbesondere ungesättigte Polyesterharze und Vinylesterharze geeignet und beispielsweise in den Anmeldungen EP 1 935 860 A1, DE 195 31 649 A1, WO 02/051903 A1 und WO 10/108939 A1 beschrieben sind. Vinylesterharze sind dabei aufgrund ihrer hydrolytischen Beständigkeit und ausgezeichneten mechanischen Eigenschaften am stärksten bevorzugt.

Beispiele geeigneter ungesättiger Polyester, die in der erfindungsgemäßen Harzmischung verwendet werden können, werden in folgende Kategorien eingeteilt, wie sie durch M. Malik et al. in J. M. S. - Rev. Macromol. Chem. Phys., C40(2 and 3), p.139-165 (2000) klassifiziert wurden:
(1) Ortho-Harze: diese basieren auf Phthalsäureanhydrid, Maleinsäureanhydrid oder Fumarsäure und Glykolen, wie 1,2-Propylenglykol, Ethylenglykol, Diethylenglykol, Triethylenglykol, 1,3-Propylenglykol, Dipropylenglykol, Tripropylenglykol, Neopentylglykol oder hydrogeniertes Bisphenol-A;
(2) Iso-Harze: diese werden aus Isophthalsäure, Maleinsäureanhydrid oder Fumarsäure und Glykolen hergestellt. Diese Harze können höhere Anteile an Reaktivverdünnern enthalten als die Ortho-Harze;
(3) Bisphenol-A-fumarate: diese basieren auf ethoxyliertem Bisphenol-A und Fumarsäure;
(4) HET-Säure-Harze (Hexachloro-endo-methylen-tetrahydrophthalsäure-Harze): sind Harze, die aus Chlor/Brom enthaltenden Anhydriden oder Phenolen bei der Herstellung von ungesättigten Polyesterharzen gewonnen werden.

Neben diesen Harzklassen können noch die sogenannten Dicyclopentadien-Harze (DCPD-Harze) als ungesättigte Polyesterharze unterschieden werden. Die Klasse der DCPD-Harze wird entweder durch Modifikation eines der oben genannten Harztypen durch Diels-Alder-Reaktion mit Cyclopentadien erhalten, oder sie werden alternativ durch eine erste Reaktion einer Dicarbonsäure, z.B. Maleinsäure, mit Dicyclopentadienyl, und anschließend durch eine zweite Reaktion, der gewöhnlichen Herstellung eines ungesättigten Polyesterharzes erhalten, wobei man bei letzterem von einem DCPD-Maleatharz spricht.

Das ungesättigte Polyesterharz hat bevorzugt ein Molekulargewicht Mn im Bereich von 500 bis 10.000 Dalton, stärker bevorzugt im Bereich von 500 bis 5000 und noch stärker bevorzugt im Bereich von 750 bis 4000 (nach ISO 13885-1). Das ungesättigte Polyesterharz hat einen Säurewert im Bereich 0 bis 80 mg KOH/g Harz, bevorzugt im Bereich von 5 bis 70 mg KOH/g Harz (nach ISO 2114-2000). Wird ein DCPD-Harz als ungesättigtes Polyesterharz verwendet beträgt der Säurewert bevorzugt 0 bis 50 mg KOH/g Harz.

Im Sinne der Erfindung sind Vinylesterharze Oligomere, Präpolymere oder Polymere mit mindestens einer (Meth)acrylat-Endgruppe, so genannte (Meth)acrylatfunktionalisierte Harze, wozu auch Urethan(meth)acrylat-Harze und Epoxy(meth)acrylate zählen.

Vinylesterharze, die nur in Endstellung ungesättigte Gruppen aufweisen, werden zum Beispiel durch Umsetzung von Epoxid-Oligomeren oder -Polymeren (z.B. Bisphenol-A-digylcidylether, Epoxide vom Phenol-Novolak-Typ oder Epoxid-Oligomere auf der Basis von Tetrabrombisphenol A) mit beispielsweise (Meth)acrylsäure oder (Meth)acrylamid erhalten. Bevorzugte Vinylester-Harze sind (Meth)acrylatfunktionalisierte Harze und Harze, die durch Umsetzung eines Epoxid-Oligomers oder -Polymers mit Methacrylsäure oder Methacrylamid, bevorzugt mit Methacrylsäure, erhalten werden. Beispiele solcher Verbindungen sind aus den Anmeldungen US 3 297 745 A, US 3 772 404 A, US 4 618 658 A, GB 2 217 722 A1, DE 37 44 390 A1 und DE 41 31 457 A1 bekannt.

Als Vinylesterharz besonders geeignet und bevorzugt sind (Meth)acrylatfunktionalisierte Harze, die z.B. durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, wie sie beispielsweise in der DE 3940309 A1 beschrieben sind, erhalten werden.

Als Isocyanate können aliphatische (cyclische oder lineare) und/oder aromatische di-oder höherfunktionelle Isocyanate bzw. Präpolymere davon verwendet werden. Die Verwendung solcher Verbindungen dient der Erhöhung der Benetzungsfähigkeit und damit der Verbesserung der Adhäsionseigenschaften. Bevorzugt sind aromatische di-oder höherfunktionelle Isocyanate bzw. Präpolymere davon, wobei aromatische di-oder höherfunktionelle Präpolymere besonders bevorzugt sind. Beispielhaft können Toluylendiisocyanat (TDI), Düsocyanatodiphenylmethan (MDI) und polymeres Düsocyanatodiphenylmethan (pMDI) zur Erhöhung der Kettenversteifung und Hexandüsocyanat (HDI) und Isophorondiisocyanat (IPDI), welche die Flexibilität verbessern, genannt werden, worunter polymeres Düsocyanatodiphenylmethan (pMDI) ganz besonders bevorzugt ist

Als Acrylverbindungen sind Acrylsäure und am Kohlenwasserstoffrest substituierte Acrylsäuren wie Methacrylsäure, hydroxylgruppenhaltige Ester der Acryl- bzw. Methacrylsäure mit mehrwertigen Alkoholen, Pentaerythrittri(meth)acrylat, Glyceroldi(meth)acrylat, wie Trimethylolpropandi(meth)acrylat, Neopentylglycolmono(meth)acrylat geeignet. Bevorzugt sind Acryl- bzw. Methacrylsäurehydroxylalkylester, wie Hydroxyethyl(meth)acrylat, Hydroxypropyl(meth)acrylat, Polyoxyethylen(meth)acrylat, Polyoxypropylen(meth)-acrylat, zumal solche Verbindungen der sterischen Hinderung der Verseifungsreaktion dienen.

Als gegebenenfalls einsetzbare Hydroxyverbindungen sind geeignet zwei- oder höherwertige Alkohole, etwa Folgeprodukte des Ethylen- bzw. Propylenoxids, wie Ethandiol, Di- bzw. Triethylenglycol, Propandiol, Dipropylenglycol, andere Diole, wie 1,4-Butandiol, 1,6-Hexandiol, Neopentylglycol, Diethanolamin, weiter Bisphenol A bzw. F bzw. deren Ethox-/Propoxylierungs- und/oder Hydrierungs- bzw. Halogenierungsprodukte, höherwertige Alkohole, wie Glycerin, Trimethylolpropan, Hexantriol und Pentaerythrit, hydroxylgruppenhaltige Polyether, beispielsweise Oligomere aliphatischer oder aromatischer Oxirane und/oder höherer cyclischer Ether, wie Ethylenoxid, Propylenoxid, Styroloxid und Furan, Polyether, die in der Hauptkette aromatische Struktureinheiten enthalten, wie die des Bisphenol A bzw. F, hydroxylgruppenhaltige Polyester auf Basis der obengenannten Alkohole bzw. Polyether und Dicarbonsäuren bzw. ihrer Anhydride, wie Adipinsäure, Phthalsäure, Tetra- bzw. Hexahydrophthalsäure, Hetsäure, Maleinsäure, Fumarsäure, Itaconsäure, Sebacinsäure und dergleichen. Besonders bevorzugt sind Hydroxyverbindungen mit aromatischen Struktureinheiten zur Kettenversteifung des Harzes, Hydroxyverbindungen, die ungesättigte Struktureinheiten enthalten, wie Fumarsäure, zur Erhöhung der Vernetzungsdichte, verzweigte bzw. sternförmige Hydroxyverbindungen, insbesondere drei- bzw. höherwertige Alkohole und/ oder Polyether bzw. Polyester, die deren Struktureinheiten enthalten, verzweigte bzw. sternförmige Urethan(meth)acrylate zur Erzielung niedrigerer Viskosität der Harze bzw. ihrer Lösungen in Reaktivverdünnern und höherer Reaktivität und Vernetzungsdichte.

Das Vinylester-Harz hat bevorzugt ein Molekulargewicht Mn im Bereich von 500 bis 3000 Dalton, stärker bevorzugt 500 bis 1500 Dalton (nach ISO 13885-1). Das Vinylester-Harz hat einen Säurewert im Bereich von 0 bis 50 mg KOH/g Harz, bevorzugt im Bereich von 0 bis 30 mg KOH/g Harz (nach ISO 2114-2000).

All diese Harze, die erfindungsgemäß verwendet werden können, können gemäß dem Fachmann bekannten Verfahren modifiziert werden, um zum Beispiel geringere Säurezahlen, Hydroxidzahlen oder Anhydridzahlen zu erreichen, oder durch das Einbringen von flexiblen Einheiten in das Grundgerüst flexibler gemacht werden, und dergleichen.

Darüber hinaus kann das Harz noch andere reaktive Gruppen, die mit einem Radikalinitiator, wie Peroxiden, polymerisiert werden können, enthalten, zum Beispiel reaktive Gruppen, die von der Itaconsäure, Citraconsäure und allylischen Gruppen und dergleichen abgeleitet sind.

Als Epoxidharz (a-2) kommt eine Vielzahl der hierfür dem Fachmann bekannten und kommerziell erhältlichen Verbindungen in Betracht, die im Mittel mehr als eine EpoxidGruppe, vorzugsweise zwei Epoxid-Gruppen, pro Molekül enthalten. Diese EpoxidVerbindungen (Epoxidharze) können dabei sowohl gesättigt als auch ungesättigt sowie aliphatisch, alicyclisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppen und ähnliche. Im Rahmen der Erfindung sind auch trimere und tetramere Epoxide geeignet, Geeignete Polyepoxid-Verbindungen sind z.B. in Lee, Neville, Handbook of Epoxy Resins 1967, beschrieben. Vorzugsweise handelt es sich bei den Epoxiden um Glycidylether, die sich von mehrwertigen Alkoholen, insbesondere Bisphenolen und Novolaken ableiten. Die Epoxidharze haben ein Epoxyäquivalentgewicht von 120 bis 2000 g/EQ, vorzugsweise von 140 bis 400. Es können auch Mischungen von mehreren Epoxidharzen verwendet werden. Besonders bevorzugt werden flüssige Diglycidylether auf Basis von Bisphenol A und/oder F mit einem Epoxyäquivalentgewicht von 180 bis 190 g/EQ. Es können auch Mischungen mehrerer Epoxidharze verwendet werden. Bevorzugt ist das Epoxid ein Diglycidylether von Bisphenol A oder von Bisphenol F oder einem Gemisch davon.

Als mehrwertige Phenole sind beispielsweise zu nennen: Resorcin, Hydrochinon, 2,2-Bis-(4-Hydroxyphenyl)-propan (Bisphenol A), Isomerengemische des Dihydroxyphenylmethans (Bisphenol F), Tetrabrom-Bisphenol A, Novolake, 4,4'-Dihydroxyphenylcyclohexan, 4,4'-Dihydroxy-3,3'-dimethyldiphenylpropan und dergleichen.

Das Epoxidharz hat bevorzugt ein Molekulargewicht von mindestens 300 Dalton. Das Epoxidharz hat ein Molekulargewicht von höchstens 10.000 Dalton und bevorzugt höchstens 5.000 Dalton. Das Molekulargewicht des Epoxidharzes hängt dabei im Wesentlichen von der gewünschten Viskosität und Reaktivität der Reaktionsharz-Zusammensetzung und/oder von der zu erreichenden Vernetzungsdichte ab.

Erfindungsgemäß können auch Kombinationen unterschiedlicher Epoxidharze als Epoxidharz verwendet werden.

Zweckmäßig wird die Härtung der radikalisch härtbaren Verbindung (a-1) mit einem Peroxid als Härtungsmittel (b-1) initiiert. Neben dem Peroxid kann zusätzlich ein Beschleuniger verwendet werden. Alle dem Fachmann bekannten Peroxide, die zum Härten von ungesättigten Polyesterharzen und Vinylesterharzen verwendet werden, können eingesetzt werden. Derartige Peroxide umfassen organische und anorganische Peroxide, entweder flüssig oder fest, wobei Wasserstoffperoxid auch verwendet werden kann. Beispiele geeigneter Peroxide sind Peroxycarbonate (der Formel -OC(O)OO-), Peroxyester (der Formel -C(O)OO-), Diacylperoxide (der Formel - C(O)OOC(O)-), Dialkylperoxide (der Formel -OO-) und dergleichen. Diese können als Oligomer oder Polymer vorliegen. Eine umfassende Reihe an Beispielen für geeignete Peroxide ist zum Beispiel in der Anmeldung US 2002/0091214-A1, Absatz [0018], beschrieben.

Bevorzugt sind die Peroxide aus der Gruppe der organischen Peroxide ausgewählt. Geeignete organische Peroxide sind: tertiäre Alkylhydroperoxide, wie tert-Butylhydroperoxid, und andere Hydroperoxide, wie Cumenhydroperoxid, Peroxyester oder Persäuren, wie tert-Butylperester (z.B. tert-Butylperoxybenzoat), Benzoylperoxid, Peracetate und Perbenzoate, Lauroylperoxid, einschließlich (Di)peroxyester, Perether, wie Peroxydiethylether, Perketone, wie Methylethylketoneperoxid. Die als Härter verwendeten organischen Peroxide sind oft tertiäre Perester oder tertiäre Hydroperoxide, d.h. Peroxid-Verbindungen mit tertiären Kohlenstoffatomen, die direkt an eine -O-O-acyl- oder -OOH-Gruppe gebunden sind. Aber auch Gemische dieser Peroxide mit anderen Peroxiden können erfindungsgemäß eingesetzt werden. Die Peroxide können auch gemischte Peroxide sein, d.h. Peroxide, die zwei verschiedene Peroxid-tragende Einheiten in einem Molekül aufweisen. Bevorzugt wird zum Härten Benzoylperoxid (BPO) oder tert-Butylperoxybenzoat verwendet.

Das zur Härtung des Epoxidharzes (a-2) verwendete mindestens eine Amin (b-2) ist zweckmäßig ein primäres und/oder sekundäres Amin. Das Amin kann aliphatisch, einschließlich cycloaliphatisch, aromatisch und/oder araliphatisch sein und ein oder mehrere Amino-Gruppen (im Folgenden als Polyamin bezeichnet) tragen. Das Polyamin trägt bevorzugt mindestens zwei primäre aliphatische Amino-Gruppen. Ferner kann das Polyamin auch Amino-Gruppen tragen, die sekundären oder tertiären Charakter haben. Auch Polyaminoamide und Polyalkylenoxid-polyamine oder Aminaddukte, wie Amin-Epoxy Harzaddukte oder Mannichbasen sind ebenso geeignet. Als araliphatisch werden Amine definiert, die sowohl aromatische als auch aliphatische Reste enthalten.

Geeignete Amine, ohne den Umfang der Erfindung einzuschränken, sind beispielsweise: 1,2-Diaminoethan(ethylendiamin), 1,2-Propandiamin, 1,3-Propandiamin, 1,4-Diaminobutan, 2,2-Dimethyl-1,3-propandiamin (Neopentandiamin), Diethylaminopropylamin (DEAPA), 2-Methyl-1,5-diaminopentan, 1,3-Diaminopentan, 2,2,4- oder 2,4,4-Trimethyl-1,6-diaminohexan und Gemische davon (TMD), 1-Amino-3-aminomethyl-3,5,5-trimethylcyclohexan, 1,3-Bis(aminomethyl)-cyclohexan, 1,2-Bis(aminomethyl)cyclohexan, Hexamethylendiamin (HMD), 1,2- und 1,4-Diaminocyclohexan (1,2-DACH und 1,4-DACH), Bis(4-aminocyclohexyl)methan, Bis(4-amino-3-methylcyclohexyl)methan, Diethylentriamin (DETA), 4-Azaheptan-1,7-diamin, 1,11-Diamino-3,6,9-trioxundecan, 1,8-Diamino-3,6-dioxaoctan, 1,5-Diamino-methyl-3-azapentan, 1,10-Diamino-4,7-dioxadecan, Bis(3-aminopropyl)amin, 1,13-Diamino-4,7,10-trioxatridecan, 4-Aminomethyl-1,8-diaminooctan, 2-Butyl-2-ethyl-1,5-diaminopentan, N,N-Bis-(3-aminopropyl)methylamin, Triethylentetramin (TETA), Tetraethylenpentamin (TEPA), Pentaethylenhexamin (PEHA), Bis(4-amino-3-methylcyclohexyl)methan, 1,3-Benzoldimethanamin (m-Xylylendiamin, mXDA), 1,4-Benzoldimethanamin (p-Xylylendiamin, pXDA), 5-(Aminomethyl)bicyclo[[2.2.1]hept-2-yl]methylamin (NBDA, Norbornandiamin), Dimethyldipropylentriamin, Dimethylaminopropyl-aminopropylamin (DMAPAPA), 3-Aminomethyl-3,5,5-trimethylcyclohexylamin (Isophorondiamin (IPD)), Diaminodicyclohexylmethan (PACM), gemischte polycyclische Amine (MPCA) (z.B. Ancamine® 2168), Dimethyldiaminodicyclohexylmethan (Laromin® C260), 2,2-Bis(4-aminocyclohexyl)propan, (3(4),8(9)Bis(aminomethyl)dicyclo[5.2.1.0^{2,6}]decan (Isomerengemisch, tricyclischer primärer Amine; TCD-Diamin).

Bevorzugt sind Polyamine, wie 2-Methylpentandiamin (DYTEK A®), 1-Amino-3-aminomethyl-3,5,5-trimethylcyclohexan (IPD), 1,3-Benzoldimethanamin (m-Xylylendiamin, mXDA), 1,4-Benzoldimethanamin (p-Xylylendiamin, PXDA), 1,6-Diamino-2,2,4-trimethylhexan (TMD), Diethylentriamin (DETA), Triethylentetramin (TETA), Tetraethylenpentamin (TEPA), Pentaethylenhexamin (PEHA), N-Ethylaminopiperazin (N-EAP), 1,3-Bisaminomethylcyclohexan (1,3-BAC), (3(4),8(9)Bis(aminomethyl)dicyclo[5.2.1.0^{2,6}]decan (Isomerengemisch, tricyclischer primärer Amine; TCD-Diamin), 1,14-Diamino-4,11-dioxatetradecan, Dipropylentriamin, 2-Methyl-1,5-pentandiamin, N,N'-Dicyclohexyl-1,6-hexandiamin, N,N'-Dimethyl-1,3-diaminopropan, N,N'-Diethyl-1,3-diaminopropan, N,N-Dimethyl-1,3-diaminopropan, sekundäre Polyoxypropylendi- und triamine, 2,5-Diamino-2,5-dimethylhexan, Bis-(amino-methyl)tricyclopentadien, 1,8-Diamino-p-menthan, Bis-(4-amino-3,5-dimethylcyclohexyl)methan, 1,3-Bis(aminomethyl)cyclohexan (1,3-BAC), Dipentylamin, N-2-(Aminoethyl)piperazin (N-AEP), N-3-(Aminopropyl)piperazin, Piperazin.

In diesem Zusammenhang wird Bezug genommen auf die Anmeldung EP 1 674 495 A1, deren Inhalt hiermit in diese Anmeldung aufgenommen wird.

Das Amin kann entweder alleine oder als Gemisch aus zweien oder mehreren davon eingesetzt werden.

In einer bevorzugten Ausführungsform der Erfindung enthält die Zusammensetzung weitere niederviskose, radikalisch polymerisierbare Verbindungen als Reaktivverdünner für die radikalisch härtbare Verbindung (a-1), um deren Viskosität falls erforderlich, anzupassen. Diese werden zweckmäßig zu der radikalisch härtbaren Verbindung (a-1) gegeben und sind daher bei dem dreikomponentigen System in der Komponente (I) enthalten.

Geeignete Reaktivverdünner sind in den Anmeldungen EP 1 935 860 A1 und DE 195 31 649 A1 beschrieben. Vorzugsweise enthält die Harzmischung als Reaktivverdünner einen (Meth)acrylsäureester, wobei besonders bevorzugt (Meth)acrylsäureester aus der Gruppe ausgewählt werden, bestehend aus Hydroxypropyl(meth)acrylat, Propandiol-1,3-di(meth)acrylat, Butandiol-1,2-di(meth)acrylat, Trimethylolpropantri(meth)acrylat, 2-Ethylhexyl(meth)acrylat, Phenylethyl-(meth)acrylat, Tetrahydrofurfuryl(meth)acrylat, Ethyltriglykol(meth)acrylat, N,N-Dimethylaminoethyl(meth)acrylat, N,N-Dimethylaminomethyl(meth)acrylat, Butandiol-1,4-di(meth)acrylat, Acetoacetoxyethyl(meth)acrylat, Ethandiol-1,2-di(meth)acrylat, Isobornyl(meth)acrylat, Diethylenglykoldi(meth)acrylat, Methoxypolyethylenglykolmono(meth)acrylat, Trimethylcyclohexyl(meth)acrylat, 2-Hydroxyethyl(meth)acrylat, Dicyclopentenyloxyethyl(meth)acrylat und/oder Tricyclopentadienyldi(meth)acrylat, Bisphenol-A-(meth)acrylat, Novolakepoxidi(meth)acrylat, Di-[(meth)acryloyl-maleoyl]-tricyclo-5.2.1.0.^{2.6}-decan, Dicyclopentenyloxyethylcrotonat, 3-(Meth)acryloyl-oxymethyl-tricylo-5.2.10.^{2.6}-decan, 3-(Meth)cyclopentadienyl(meth)acrylat, Isobornyl(meth)acrylat und Decalyl-2-(meth)acrylat.

Grundsätzlich können auch andere übliche radikalisch polymerisierbaren Verbindungen, allein oder im Gemisch mit den (Meth)acrylsäureestern, eingesetzt werden, z. B. Styrol, α-Methylstyrol, alkylierte Styrole, wie tert-Butylstyrol, Divinylbenzol und Allylverbindungen.

In einer weiter bevorzugten Ausführungsform der Erfindung enthält die Zusammensetzung weitere Epoxid-funktionalisierte Verbindungen als Reaktivverdünner für das Epoxidharz, um dessen Viskosität falls erforderlich, anzupassen. Diese werden zweckmäßig zu dem Epoxidharz (a-2) gegeben und sind daher bei dem dreikomponentigen System in der Komponente (II) enthalten.

Als Reaktivverdünner finden Glycidylether von aliphatischen, alicyclischen oder aromatischen Mono- oder insbesondere Polyalkoholen Verwendung, wie Monogylcidylether, z.B. o-Kresylglycidylether, und/oder insbesondere Glycidylether mit einer Epoxid-Funktionalität von mindestens 2, wie 1,4-Butandioldiglycidylether (BDDGE), Cyclohexandimethanoldiglycidylether, Hexandioldiglycidylether und/oder insbesondere Tri- oder höhere Glycidylether, z.B. Glycerintriglycidylether, Pentaerythrittetraglycidylether oder Trimethylolpropantriglycidylether (TMPTGE), oder ferner Mischungen von zwei oder mehr dieser Reaktivverdünner Verwendung, vorzugsweise Triglycidylether, besonders bevorzugt als Gemisch aus 1,4-Butandioldiglycidylether (BDDGE) und Trimethylolpropantriglycidylether (TMPTGE).

Der Beitrag, den die Reaktivverdünner zum Anteil der jeweiligen funktionellen Gruppen leisten, ist erfindungsgemäß bei dem Verhältnis nDB:nEP zu berücksichtigen. Dies bedeutet, dass jeweils die Summe der radikalisch polymerisierbaren funktionellen Gruppen und die Summe der funktionellen Gruppen, die mit einem Amin reagieren können, die sich jeweils aus dem Anteil des Harzbestandteils und der Reaktivverdünner, sofern diese enthalten sind, ergeben, zu berücksichtigen sind und in die oben aufgeführten Molverhältnisse eingehen.

Die Peroxide werden bevorzugt durch einen Beschleuniger initiiert. Geeignete Beschleuniger, die reaktionsinhibierend getrennt von den radikalisch härtbaren Verbindungen sind, sind dem Fachmann bekannt. Diese sind zweckmäßig Amine.

Geeignete Amine sind unter folgenden Verbindungen ausgewählt, die beispielsweise in der Anmeldung US 2011071234 A1 beschrieben sind: Dimethylamin, Trimethylamin, Ethylamin, Diethylamin, Triethylamin, n-Propylamin, Di-n-propylamin, Tri-n-propylamin, Isopropylamin, Diisopropylamin, Triisopropylamin, n-Butylamin, Isobutylamin, tert-Butylamin, Di-n-butylamin, Diisobutylamin, Tri-isobutylamin, Pentylamin, Isopentylamin, Diisopentylamin, Hexylamin, Octylamin, Dodecylamin, Laurylamin, Stearylamin, Aminoethanol, Diethanolamin, Triethanolamin, Aminohexanol, Ethoxyaminoethan, Dimethyl-(2-chloroethyl)amin, 2-Ethylhexylamin, Bis-(2-chloroethyl)amin, 2-Ethylhexylamin, Bis-(2-ethylhexyl)amin, N-Methylstearylamin, Dialkylamine, Ethylendiamin, N,N'-Dimethylethylendiamin, Tetramethylethylendiamin, Diethylentriamin, Permethyldiethylentriamin, Triethylentetramin, Tetraethylenpentamin, 1,2-Diaminopropan, Di-propylentriamin, Tripropylentetramin, 1,4-Diaminobutan, 1,6-Diaminohexan, 4-Amino-1-diethylaminopentan, 2,5-Diamino-2,5-dimethylhexan, Trimethylhexamethylendiamin, N, N-Dimethylaminoethanol, 2-(2-Diethylaminoethoxy)ethanol, Bis-(2-hydroxyethyl)-oleylamin, Tris-[2-(2-hydroxy-ethoxy)-ethyl]amin, 3-Amino-1-propanol, Methyl-(3-aminopropyl)ether, Ethyl-(3-aminopropyl)ether, 1,4-Butandiol-bis(3-aminopropylether), 3-Dimethylamino-1-propanol, 1-Amino-2-propanol, 1-Diethylamino-2-propanol, Diisopropanolamin, Methyl-bis-(2-hydroxypropyl)-amin, Tris-(2-hydroxypropyl)amin, 4-Amino-2-butanol, 2-Amino-2-methylpropanol, 2-Amino-2-methyl-propandiol, 2-Amino-2-hydroxymethylpropandiol, 5-Diethylamino-2-pentanon, 3-Methylaminopropionsäurenitril, 6-Aminohexansäure, 11-Aminoundecansäure, 6-Aminohexansäureethylester, 11-Aminohexansäure-isopropylester, Cyclohexylamin, N-Methylcyclohexylamin, N,N-Dimethylcyclohexylamin, Dicyclohexylamin, N-Ethylcyclohexylamin, N-(2-Hydroxyethyl)-cyclohexylamin, N,N-Bis-(2-hydroxyethyl)-cyclohexylamin, N-(3-Aminopropyl)-cyclohexylamin, Aminomethylcyclohexan, Hexahydrotoluidin, Hexahydrobenzylamin, Anilin, N-Methylanilin, N,N-Dimethylanilin, N,N-Diethylanilin, N,N-Di-propylanilin, iso-Butylanilin, Toluidine, Diphenylamin, Hydroxyethylanilin, Bis-(hydroxyethyl)anilin, Chloranilin, Aminophenole, Aminobenzoesäuren und deren Ester, Benzylamin, Dibenzylamin, Tribenzylamin, Methyldibenzylamin, α-Phenylethylamin, Xylidin, Diisopropylanilin, Dodecylanilin, Aminonaphthalin, N-Methylaminonaphthalin, N,N-Dimethylaminonaphthalin, N,N-Dibenzylnaphthalin, Diaminocyclohexan, 4,4'-Diamino-dicyclohexylmethan, Diamino-dimethyl-dicyclohexylmethan, Phenylendiamin, Xylylendiamin, Diaminobiphenyl, Naphthalindiamine, Toluidine, Benzidine, 2,2-Bis-(aminophenyl)-propan, Aminoanisole, Amino-thiophenole, Aminodiphenylether, Aminocresole, Morpholin, N-Methylmorpholin, N-Phenylmorpholin, Hydroxyethylmorpholin, N-Methylpyrrolidin, Pyrrolidin, Piperidin, Hydroxyethylpiperidin, Pyrrole, Pyridine, Chinoline, Indole, Indolenine, Carbazole, Pyrazole, Imidazole, Thiazole, Pyrimidine, Chinoxaline, Aminomorpholin, Dimorpholinethan, [2,2,2]-Diazabicyclooctan und N,N-Dimethyl-p-toluidin.

Bevorzugte Amine sind Anilin- und Toluidin-Derivate und N,N-Bisalkylarylamine, wie N,N,-Dimethylanilin, N,N-Diethylanilin, N,N-Dimethyl-p-toluidin, N,N-Bis(hydroxyalkyl)arylamine, N,N-Bis(2-hydroxyethyl)aniline, N,N-Bis(2-hydroxyethyl)toluidin, N,N-Bis(2-hydroxypropyl)anilin, N,N-Bis(2-hydroxypropyl)toluidin, N,N-Bis(3-methacryloyl-2-hydroxypropyl)-p-toluidin, N,N-Dibutoxyhydroxypropyl-p-toluidin und 4,4'-Bis(dimethylamino)diphenylmethan.

Polymere Amine, wie solche die durch Polykondensation von N,N-Bis(hydroxylalkyl)anilin mit Dicarbonsäuren oder durch Polyaddition von Ethylenoxid und diese Amine erhalten werden, sind ebenso als Beschleuniger geeignet.

Auch die Reaktion des Epoxidharzes (b-2) kann durch Zugabe geeigneter Verbindungen beschleunigt werden. Derartige Verbindungen sind dem Fachmann bekannt. Beispielhaft wird auf die in der Anmeldung WO 99/29757 A1 beschriebenen Novolak-Harze hingewiesen, die sich besonders vorteilhaft als Beschleuniger erwiesen haben. In diesem Zusammenhang wird Bezug genommen auf die Anmeldung WO 99/29757, deren Inhalt hiermit in diese Anmeldung aufgenommen wird.

In einer besonders bevorzugten Ausführungsform der Erfindung umfasst der Beschleuniger ferner ein Aminophenol oder einen Ether davon, der mindestens eine tertiäre Aminogruppe gegebenenfalls zusammen mit einer primären und/oder sekundären Aminogruppe aufweist, als Beschleuniger. Der Beschleuniger ist bevorzugt unter Verbindungen der allgemeinen Formel (I) ausgewählt, 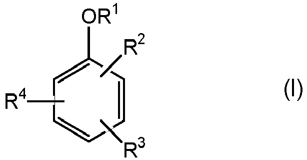 in der R¹ Wasserstoff oder ein linearer oder verzweigter C₁-C₁₅-Alkylrest ist, R² (CH₂)ₙNR⁵R⁶- oder NH(CH₂)ₙNR⁵R⁶- ist, in denen R⁵ und R⁶ unabhängig voneinander ein linearer oder verzweigter C₁-C₁₅-Alkylrest sind und n = 0 oder 1 ist, R³ und R⁴ unabhängig voneinander Wasserstoff, (CH₂)ₙNR⁷R⁸ oder NH(CH₂)ₙNR⁷R⁸ sind, R⁷ und R⁸ unabhängig voneinander Wasserstoff oder ein linearer oder verzweigter C₁-C₁₅-Alkylrest sind und n = 0 oder 1 ist.

R¹ ist bevorzugt Wasserstoff oder ein C₁-C₁₅-Alkylrest, insbesondere ein linearer C₁-C₁₅-Alkylrest, stärker bevorzugt Methyl oder Ethyl und am stärksten bevorzugt Methyl.

Bevorzugt ist das Phenol der Formel (I) in 2-, 4- und 6-Position substituiert, d.h. die Substituenten R², R³ und R⁴ sitzen in 2-, 4- und 6-Position.

Für den Fall, dass R⁵, R⁶, R⁷ und R⁸ Alkylreste sind, sind diese bevorzugt ein C₁-C₅-Alkylrest, stärker bevorzugt Methyl oder Ethyl und am stärksten bevorzugt Methyl.

Als Beschleuniger kann entweder eine Verbindung oder ein Gemisch von mindestens zwei Verbindungen der Formel (I) eingesetzt werden.

Bevorzugt ist der Beschleuniger unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Beschleuniger 2,4,6-Tris(dimethylaminomethyl)phenol.

Ein bevorzugtes Beschleunigergemisch enthält 2,4,6-Tris(dimethlaminomethyl)phenol und Bis(dimethylaminomethyl)phenol. Solche Gemische sind z.B. kommerziell erhältlich als Ancamine^{®} K-54 (AirProducts, Belgien).

Bevorzugt ist der Beschleuniger für die Reaktion des Epoxidharzes (a-2) mit einem Amin reaktionsinhibierend getrennt von dem Epoxidharz.

Es ist auch möglich, dass eine einzelne Verbindung als aminischer Beschleuniger fungiert, der beide Funktionen vereint und sowohl die Härtungsreaktion der Verbindung (a-1) als auch die Härtungsreaktion der Verbindung (a-2) beschleunigt.

Als Inhibitoren sowohl für die Lagerstabilität der radikalisch härtbaren Verbindung (a-1) und damit des Harzbestandteils (A) als auch zur Einstellung der Gelzeit sind die für radikalisch polymerisierbare Verbindungen üblicherweise verwendeten Inhibitoren geeignet, wie sie dem Fachmann bekannt sind. Bevorzugt sind die Inhibitoren unter phenolischen Verbindungen und nicht-phenolischen Verbindungen, wie stabilen Radikalen und/oder Phenothiazinen, ausgewählt.

Als phenolische Inhibitoren, die oft Bestandteil von kommerziellen radikalisch härtenden Reaktionsharzen sind, sind Phenole, wie 2-Methoxyphenol, 4-Methoxyphenol, 2,6-Di-tert-butyl-4-methylphenol, 2,4-Di-tert-butylphenol, 2,6-Di-tert-butylphenol, 2,4,6-Trimethylphenol, 2,4,6-Tris(dimethylaminomethyl)phenol, 4,4'-Thio-bis(3-methyl-6-tert-butylphenol), 4,4'-Isopropylidendiphenol, 6,6'-Di-tert-butyl-4,4'-bis(2,6-di-tert-butylphenol), 1,3,5-Trimethyl-2,4,6-tris(3,5-di-tert-butyl-4-hydroxybenzyl)benzol, 2,2'-Methylen-di-p-cresol, Brenzkatechin und Butylbrenzkatechine, wie 4-tert-Butylbrenzkatechin, 4,6-Di-tert-butylbrenzkatechin, Hydrochinone, wie Hydrochinon, 2-Methylhydrochinon, 2-tert-Butylhydrochinon, 2,5-Di-tert-butylhydrochinon, 2,6-Di-tert-butylhydrochinon, 2,6-Dimethylhydrochinon, 2,3,5-Trimethylhydrochinon, Benzochinon, 2,3,5,6-Tetrachloro-1,4-benzochinon, Methylbenzochinon, 2,6-Dimethylbenzochinon, Naphthochinon, oder Gemische von zweien oder mehreren davon, in Frage.

Als nicht-phenolische oder anaerobe, d.h. im Gegensatz zu den phenolischen Inhibitoren auch ohne Sauerstoff wirksame Inhibitoren kommen vorzugsweise Phenothiazine, wie Phenothiazin und/oder Derivate oder Kombinationen davon, oder stabile organische Radikale, wie Galvinoxyl- und N-oxyl-Radikale in Betracht.

Als N-oxyl-Radikale können beispielsweise solche verwendet werden, wie sie in der DE199 56 509 beschrieben sind. Geeignete stabile N-oxyl-Radikale (Nitroxylradikale) können unter 1-Oxyl-2,2,6,6-tetramethylpiperidin, 1-Oxyl-2,2,6,6-tetramethylpiperidin-4-ol (ebenso als TEMPOL bezeichnet), 1-Oxyl-2,2,6,6-tetramethylpiperidin-4-on (ebenso als TEMPON bezeichnet), 1-Oxyl-2,2,6,6-tetramethyl-4-carboxyl-piperidin (ebenso als 4-Carboxy-TEMPO bezeichnet), 1-Oxyl-2,2,5,5-tetramethylpyrrolidin, 1-Oxyl-2,2,5,5-tetramethyl-3-carboxylpyrrolidin (ebenso als 3-Carboxy-PROXYL bezeichnet), Aluminium-N-nitrosophenylhydroxylamin, Diethylhydroxylamin ausgewählt werden. Ferner sind geeignete N-oxyl Verbindungen Oxime, wie Acetaldoxim, Acetonoxim, Methylethylketoxim, Salicyloxim, Benzoxim, Glyoxime, Dimethylglyoxim, Aceton-O-(benzyloxycarbonyl)oxim und dergleichen.

Diese Verbindungen sind besonders deshalb sinnvoll und meist erforderlich, da sonst die anzustrebende Lagerstabilität von vorzugsweise mehr als 3 Monaten, insbesondere 6 Monaten oder mehr, nicht erreicht werden kann. Die UV- und insbesondere die Lagerstabilität können so beträchtlich erhöht werden.

Ferner können in para-Stellung zur Hydroxylgruppe substituierte Pyrimidinol- oder Pyridinol-Verbindungen, wie sie in der nicht vorveröffentlichten Patentschrift DE 10 2011 077 248 B1 beschrieben sind, als Inhibitoren eingesetzt werden.

Die Inhibitoren können, abhängig von den gewünschten Eigenschaften der Harzzusammensetzungen, entweder alleine oder als Kombination von zweien oder mehreren davon verwendet werden. Die Kombination der phenolischen und der nichtphenolischen Inhibitoren ermöglicht dabei einen synergistischen Effekt, wie auch die Einstellung einer im Wesentlichen driftfreien Einstellung der Gelierzeit der Reaktionsharzformulierung zeigt.

Zweckmäßig sind die Stabilisatoren und Inhibitoren in der ersten Komponente (I) enthalten.

In einer Ausführungsform kann die Reaktionsharz-Zusammensetzung zusätzlich einen Haftvermittler enthalten. Durch den Einsatz eines Haftvermittlers wird die Vernetzung der Bohrlochwand mit der Dübelmasse verbessert, so dass sich die Haftung im ausgehärteten Zustand erhöht. Dies ist für die Verwendung der Zweikomponenten-Dübelmasse z.B. in Diamant-gebohrten Bohrlöchern von Bedeutung und erhöht die Lastwerte. Geeignete Haftvermittler sind aus der Gruppe der Silane, die mit weiteren reaktiven organischen Gruppen funktionalisiert sind und in das Polymernetzwerk eingebunden werden können, ausgewählt, wie 3-Glycidoxypropyltrimethoxysilan, 3-Glycidoxypropyltriethoxysilan, 2-(3,4-Epoxycyclohexyl)ethyltrimethoxysilan, N-2-(Aminoethyl)-3-aminopropylmethyldiethoxysilan, N-2-(Aminoethyl)-3-aminopropyltriethoxysilan, 3-Aminopropyltrimethoxysilan, 3-Aminopropyltriethoxysilan, N-Phenyl-3-aminoethyl-3-aminopropyltrimethoxysilan, 3-Mercaptopropyltrimethoxysilan und 3-Mercaptopropylmethyldimethoxysilan, wobei 3-Aminopropyltriethoxysilan bevorzugt ist. In dieser Hinsicht wird Bezug genommen auf die Anmeldungen DE200910059210 und DE201010015981 verwiesen.

Der Haftvermittler wird zweckmäßig der dritten Komponente (III) zugegeben.

Die Komponenten (I), (II) und (III) können ferner anorganische Zuschlagstoffe enthalten, wie Füllstoffe und/oder weitere Zusätze.

Als Füllstoffe finden übliche Füllstoffe, vorzugsweise mineralische oder mineralähnliche Füllstoffe, wie Quarz, Glas, Sand, Quarzsand, Quarzmehl, Porzellan, Korund, Keramik, Talkum, Kieselsäure (z. B. pyrogene Kieselsäure), Silikate, Ton, Titandioxid, Kreide, Schwerspat, Feldspat, Basalt, Aluminiumhydroxid, Granit oder Sandstein, polymere Füllstoffe, wie Duroplaste, hydraulisch härtbare Füllstoffe, wie Gips, Branntkalk oder Zement (z. B. Tonerd- oder Portlandzement), Metalle, wie Aluminium, Ruß, ferner Holz, mineralische oder organische Fasern, oder dergleichen, oder Gemische von zwei oder mehr davon, die als Pulver, in körniger Form oder in Form von Formkörpern zugesetzt sein können, Verwendung. Die Füllstoffe können in beliebigen Formen vorliegen, beispielsweise als Pulver oder Mehl, oder als Formkörper, z. B. in Zylinder-, Ring-, Kugel-, Plättchen-, Stäbchen-, Sattel- oder Kristallform, oder ferner in Faserform (fibrilläre Füllstoffe), und die entsprechenden Grundteilchen haben vorzugsweise einen maximalen Durchmesser von 10 mm. Bevorzugt und deutlicher verstärkend wirken sich jedoch die globulären, inerten Stoffe (Kugelform) aus.

Weitere denkbare Zusätze sind ferner Thixotropiermittel, wie gegebenenfalls organisch nachbehandelte pyrogene Kieselsäure, Bentonite, Alkyl- und Methylcellulosen, Rhizinusölderivate oder dergleichen, Weichmacher, wie Phthalsäure- oder Sebacinsäureester, Stabilisatoren, Antistatikmittel, Verdickungsmittel, Flexibilisatoren, Härtungskatalysatoren, Rheologiehilfsmittel, Netzmittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, oder Gemische von zwei oder mehr davon, möglich. Auch nicht reaktive Verdünnungsmittel (Lösungsmittel) können vorliegen, wie Niederalkylketone, z. B. Aceton, Diniederalkyl-niederalkanoylamide, wie Dimethylacetamid, Niederalkylbenzole, wie Xylole oder Toluol, Phthalsäureester oder Paraffine, Wasser oder Glykole. Ferner können Metallfänger in Form von oberflächenmodifizierten pyrogenen Kieselsäuren in der Reaktionsharz-Zusammensetzung enthalten sein.

In dieser Hinsicht wird Bezug genommen auf die Anmeldungen WO 02/079341 und WO02/079293 sowie WO 2011/128061 A1,

Bei einer besonders bevorzugten Ausführungsform des erfindungsgemäßen Mehrkomponenten-Mörtelsystems enthält die erste Komponente (I) neben der radikalisch härtbaren Verbindung (a-1) zusätzlich noch eine hydraulisch abbindende oder polykondensierbare anorganische Verbindung, insbesondere Zement, und die zweite Komponente (II) neben dem Härtungsmittel für die radikalisch härtbare Verbindung (b-1) noch Wasser. Derartige Hybridmörtelsysteme sind ausführlich in DE 42 31 161 A1 beschrieben. Dabei enthält die erste Komponente (I) vorzugsweise als hydraulisch abbindende oder polykondensierbare anorganische Verbindung Zement, beispielsweise Portlandzement oder Aluminatzement, wobei übergangsmetalloxidfreie oder übergangsmetallarme Zemente besonders bevorzugt sind. Als hydraulisch abbindende anorganische Verbindung kann auch Gips als solcher oder in Mischung mit dem Zement eingesetzt werden.

Die erste Komponente (I) kann als polykondensierbare anorganische Verbindung auch silikatische, polykondensierbare Verbindungen, insbesondere lösliches, gelöstes und/oder amorphes Siliziumdioxid enthaltende Stoffe umfassen.

Erfindungsgemäß werden die Bestandteile der Reaktionsharz-Zusammensetzung räumlich so angeordnet, dass die erste Komponente (I), welche mindestens eine radikalisch härtbare Verbindung (a-1) enthält, die zweite Komponente (II), welche das mindestens eine Epoxidharz (a-2) und das Härtungsmittel für die radikalisch härtbare Verbindung (b-1) enthält, und die dritte Komponente (III), welche mindestens ein Amin (b-2) und mindestens einen aminischen Beschleuniger enthält, reaktionsinhibierend getrennt gelagert werden. Dementsprechend wird erfindungsgemäß die Reaktionsharz-Zusammensetzung als Dreikomponenten-System konfektioniert. Bei dem aminischen Beschleuniger kann es sich um einen Beschleuniger für die Härtungsreaktion der mindestens einen Verbindung (a-1) oder um einen Beschleuniger für die Härtungsreaktion der mindestens einen Verbindung (a-2) handeln. Es kann auch ein Beschleunigergemisch aus beiden verwendet werden. Ferner kann eine einzelne Verbindung als aminischer Beschleuniger fungieren, der beide Funktionen vereint und sowohl die Härtungsreaktion der Verbindung (a-1) als auch die Härtungsreaktion der Verbindung (a-2) beschleunigt.

Damit wird zum einen verhindert, dass die Härtung des Harzbestandteils bereits bei der Lagerung einsetzt. Ein weiterer Vorteil der Erfindung liegt darin, dass bei Verwendung von Peroxiden als Radikalinitiator beliebige Peroxide und bei Verwendung von Aminen als neutrales Nukleophil beliebige Amine eingesetzt werden können, so dass eine große Flexibilität bei der Formulierung der beiden Härtungssysteme erhalten bleibt und dass eine beliebige Menge an Radikalfänger(n) gewählt werden kann, um die Gelzeit individuell gemäß den Anforderungen frei einstellen zu können.

Das Dreikomponenten-System kann in Form eines Patronen-Systems, eines Kartuschen-Systems oder eines Folienbeutel-Systems vorliegen. Bei der bestimmungsgemäßen Verwendung der erfindungsgemäßen Reaktionsharz-Zusammensetzung werden die Komponenten entweder unter Einwirkung mechanischer Kräfte oder durch Gasdruck aus den Patronen, Kartuschen oder Folienbeuteln ausgepresst, miteinander vermischt, vorzugsweise mit Hilfe eines Statikmischers, durch den die Bestandteile hindurchgeführt werden, und in das Bohrloch eingeführt, wonach die zu befestigenden Einrichtungen, wie Ankergewindestangen und dergleichen in das mit dem aushärtenden Reaktionsharz beschickte Bohrloch eingebracht und entsprechend justiert werden.

Die erfindungsgemäße Reaktionsharz-Zusammensetzung findet vor allem im Baubereich Verwendung, etwa zur Instandsetzung von Beton, als Polymerbeton, als Beschichtungsmasse auf Kunstharzbasis oder als kalthärtende Straßenmarkierung. Besonders eigenen sie sich zur chemischen Befestigung von Verankerungselementen, wie Ankern, Bewehrungseisen, Schrauben und dergleichen, in Bohrlöchern Verwendung, insbesondere in Bohrlöchern in verschiedenen Untergründen, insbesondere mineralischen Untergründen, wie solche auf der Grundlage von Beton, Porenbeton, Ziegelwerk, Kalksandstein, Sandstein, Naturstein und dergleichen.

Ein weiterer Gegenstand der Erfindung ist die Verwendung der Reaktionsharz-Zusammensetzung als Bindemittel, insbesondere zur Befestigung von Verankerungsmitteln in Bohrlöchern verschiedenen Untergrunds und zum baulichen Kleben.

Die Erfindung wird anhand einer Reihe von Beispielen und Vergleichsbeispielen näher erläutert. Alle Beispiele stützen den Umfang der Ansprüche. Die Erfindung ist jedoch nicht auf die spezifischen, in den Beispielen gezeigten Ausführungsformen beschränkt.

### BEISPIELE

Es wurden erfindungsgemäße Reaktionsharz-Zusammensetzungen nach Tabelle 1 und als Vergleich die Reaktionsharz-Zusammensetzungen nach Tabelle 2 hergestellt. Alle Zusammensetzung waren ungefüllte Systeme, d.h. ohne anorganische Zuschläge, um Einflüsse dieser Zuschläge auszuschließen.

### Gelzeit

Die Gelzeit der Mischung, die auf diesem Weg aus dem Harzbestandteil A und dem Härterbestandteil (B) des Zweikomponenten-Reaktionsharzes erhalten wurde, wird mit einem herkömmlichen Gerät (Geltimer) bei einer Temperatur von 25°C und bei 40°C bestimmt. Man stellt dazu eine 100g Mischung mit den in Tabelle 1 angegebenen Massenverhältnissen her. Dieses Gemisch wird bis zu einer Höhe von 4 cm unterhalb des Randes in ein Teströhrchen gefüllt, wobei das Teströhrchen bei einer Temperatur von 25°C oder 40°C gehalten wird. (DIN 16945, DIN EN ISO 9396). Ein Glasstab oder eine Spindel wird mit 10 Hüben pro Minuten in dem Harz auf und ab bewegt. Die Gelzeit entspricht dem Zeitpunkt, zu dem das Teströhrchen durch den oszillierenden Stab angehoben wird. Zusätzliche Tests haben gezeigt, dass der Grad der Aushärtung am Gelpunkt (gemessen durch dynamische Differenzkalometrie (DSC)) innerhalb der Messgenauigkeit konstant ist.

Die Ermittlung der Aushärtungszeit der Harze erfolgt anhand der Reaktivitätsmessung (Exothermie) gemäß DIN 16945.

### Lastwerte

Zur Bestimmung der Lastwerte der ausgehärteten Zusammensetzung wird eine M12 Ankerstange verwendet, die mit dem erfindungsgemäßen Zweikomponenten-Reaktionsharz in ein Bohrloch in Beton mit einem Durchmesser von 14 mm und einer Tiefe von 72 mm eingedübelt wurde. Die durchschnittliche Versagenslast wird durch Ausziehen der Gewindeankerstange mit enger Abstützung und Verwendung einer hochfesten Gewindeankerstange bestimmt. Es wurden jeweils 3 Gewindeankerstangen eingedübelt und deren Lastwerte nach 24 Stunden Aushärtung allgemein bestimmt. Die so erhaltenen Lastwerte sind auch als Durchschnittswerte (kN) aufgelistet.

Verschiedene Bohrlochbedingungen und/oder Aushärtebedingungen wurden getestet, wie nachfolgend gezeigt.

| **Testbedingung** | **Bemerkung** |
|---|---|
| Referenz | gut gereinigtes, trockenes hammergebohrtes Bohrloch, Aushärtung bei Raumtemperatur |
| -5°C | Referenzbohrloch, aber Setzen und Aushärten bei einer Grundmaterialtemperatur von -5°C |
| -5°C/48h | -5°C, aber Aushärten über 48 Stunden |

**Tabelle 1: Zusammensetzung der erfindungsgemäßen Reaktionsharz-Zusammensetzungen und Ergebnisse der Gelzeitbestimmung**

| **Beispiel** | **1** | **2** | **3** | **4** | **5** | **6** | **7** |
|---|---|---|---|---|---|---|---|
| | **Gew.-%** | **Gew.-%** | **Gew.-%** | **Gew.-%** | **Gew.-%** | **Gew.-%** | **Gew.-%** |
| ***Harz 1** ¹⁾* | ***2,7*** | ***9,1*** | ***11,2*** | ***4,8*** | ***21,6*** | ***21,8*** | ***26,1*** |
| BDDMA²⁾ | 1,9 | | 9,3 | | 21,6 | 21,8 | 26,1 |
| TMPTMA³⁾ | | 9 | | 9,7 | | | |
| HPMA ⁴⁾ | | | | 9,7 | | | |
| Tempol ⁵⁾ | 0,0014 | 0,0014 | 0,0014 | 0,0014 | 0,047 | 0,045 | 0,27 |
| SEH 2627 ⁶⁾ | 19,5 | 13,9 | 15,6 | 12,3 | 5,8 | 4,5 | 2,6 |
| DipPt ⁷⁾ | 0,98 | | | | 3 | 2,54 | 2,13 |
| ***Harz 2 ⁸⁾*** | **61** | **43,3** | ***48,9*** | ***38,5*** | ***18,1*** | ***13,8*** | **8** |
| Perkadox 20S ⁹⁾ | 14 | 15 | 15 | 25 | 30 | 35,6 | 34,9 |
| ***nDB:nEP*** | ***0*,*01*** | **0,27** | **0,27** | ***0,53*** | ***7,1*** | ***12,5*** | ***50*** |
| ***Aushärtung** ¹⁰⁾* | **++** | **++** | **+** | **+/-** | **+** | **++** | **++** |
| Tmax [°C] | 193 | 130 | 50 | 60 | 90 | 150 | 150 |
| Gelzeit [min] | 7 | 11 | 30 | ∼90 | 5,5 | 3 | 3 |

| | | | | | | | |
|---|---|---|---|---|---|---|---|
| ¹⁾ Urethanmethacrylatharz:BDDMA (65:35) (Urethanmethacrylatharz Doppelbindungsäquivalentgewicht 269 g/val) ²⁾ 1,4-Butandioldimethacrylat ³⁾ Trimethylolpropantrimethacrylat ⁴⁾ Hydroxypropylmethacrylat ⁵⁾ 4-Hydroxy-2,2 6,6-tetramethylpiperidin-N-oxyl ⁶⁾ aliphatisches Amin auf Mannichbasen-Basis (AEW 45 g/val; 150 mPas/25°C; Topfzeit ca. 25 Min / 25°C (Geltimer, DIN16945, BI. 1, DIN 16916)) ⁷⁾ Di-isopropyl-p-toluidin ⁸⁾ Epoxid-Harz auf Bisphenol-A/Bisphenol-F-Basis (EEW 180 g/val) ⁹⁾ Dibenzoylperoxid (fest) 20% in inerten Füllstoffen ¹⁰⁾ - = keine Aushärtung; +/- = mäßige Aushärtung; + = gute Aushärtung; ++ = sehr gute Aushärtung | | | | | | | |

### Vergleichsbeispiel 1

Als Vergleich diente ein kommerzieller Reaktionsharzmörtel auf Urethanmethacrylatharz-Basis (Hilti HY150, der Hilti Aktiengesellschaft), welcher eine sehr gute Aushärtung aufweist.

### Vergleichsbeispiel 2

Als weiterer Vergleich diente ein kommerzieller Reaktionsharzmörtel auf Epoxid-Amin-Basis (Hilti RE500, der Hilti Aktiengesellschaft), welcher eine sehr gute Aushärtung aufweist.

### Vergleichsbeispiel 3

Als weiterer Vergleich diente eine Reaktionsharzzusammensetzung, die gemäß Beispiel 2 der EP 10153243 A1 hergestellt wurde, welche eine gute Aushärtung aufweist.

### Vergleichsbeispiel 4

Als weiterer Vergleich diente eine Reaktionsharzzusammensetzung mit einem Verhältnis *nDB:DEP* von 4,2 mit folgenden Bestandteilen: 17,7 Gew.-% Harz 1, 17,7 Gew.-% BDDMA, 0,044 Gew.-% Tempol, 6,4 Gew.-% SEH 2627, 3 Gew.-% DipPt, 19,9 Gew.-% Harz 2, 35,23 Gew.-% Perkadox 20S.

Diese Zusammensetzung härtete nicht aus.

**Tabelle 3: Ergebnisse der Lastwertbestimmung [kN]**

| **Beispiel** | **Ref. 24h** | **-5°C 24h** | **-5°C 48h** |
|---|---|---|---|
| 1 | 104 | 1 | 63 |
| 6 | 79 | 88 | 101 |
| Vergleich 1 | 73 | 80 | 83 |
| Vergleich 2 | 101 | 0 | 57 |
| Vergleich 3 | 90 | 40 | 66 |
| Vergleich 4 | - * | - * | - * |

| | | | |
|---|---|---|---|
| * keine Aushärtung | | | |

## Patentansprüche

1. Reaktionsharz-Zusammensetzung mit einem Harzbestandteil (A), der mindestens eine radikalisch härtbare Verbindung (a-1) und ein Epoxidharz (a-2), das im Durchschnitt mehr als eine Epoxidgruppe pro Molekül umfasst, enthält und einem Härterbestandteil (B), der ein Härtungsmittel für die mindestens eine radikalische Verbindung (b-1) und mindestens ein Amin (b-2) enthält, wobei die Verbindungen (a-1) und (b-1) sowie die Verbindungen (a-2) und (b-2) jeweils reaktionsinhibierend räumlich getrennt voneinander sind, und wobei das Verhältnis von Doppelbindungswert (Anzahl der Mole der Doppelbindungsgruppen bzw. Doppelbindungen in 100 g Harz ) zu Epoxidwert (der Anzahl der Mole der Epoxidgruppen in 100g Harz) der Harzkomponente nDB:nEP zwischen 0,01 und 0,55 oder zwischen 5 und 50 liegt.

2. Reaktionsharz-Zusammensetzung nach Anspruch 1, wobei das Verhältnis von Doppelbindungswert zu Epoxidwert der Harzkomponente nDB:nEP zwischen 0,01 und 0,30 oder zwischen 7 und 50 liegt.

3. Reaktionsharz-Zusammensetzung nach Anspruch 2, wobei das Verhältnis von Doppelbindungswert zu Epoxidwert der Harzkomponente nDB:nEP zwischen 0,01 und 0,25 oder zwischen 10 und 50 liegt.

4. Reaktionsharz-Zusammensetzung nach einem der vorhergehenden Ansprüche, mit der Maßgabe, dass die Zusammensetzung keine Cu-, Mn- und Eisenverbindung und keine verbrückende Verbindung enthält.

5. Reaktionsharz-Zusammensetzung nach einem der vorhergehenden Ansprüche, wobei die Verbindungen (a-1), (a-2), (b-1) und (b-2) derart auf drei Komponenten aufgeteilt sind, so dass eine erste Komponente (I) die Verbindung (a-1) enthält, eine zweite Komponente (II) das mindestens eine Epoxidharz (a-2) und das Härtungsmittel (b-1) enthält und eine dritte Komponente (III) das mindestens eine Amin (b-2) enthält, und die drei Komponenten (I), (II) und (III) reaktionsinhibierend räumlich getrennt voneinander sind.

6. Reaktionsharz-Zusammensetzung nach einem der vorhergehenden Ansprüche, wobei die mindestens eine radikalisch härtbare Verbindung (a-1) ein ungesättigtes Polyesterharz, ein Vinyletherharz, ein Vinylesterharz und/oder ein Vinylesterurethanharz ist.

7. Reaktionsharz-Zusammensetzung nach Anspruch 6, wobei die radikalisch härtbare Verbindung (a-1) ein Vinylesterurethanharz ist.

8. Reaktionsharz-Zusammensetzung nach Anspruch 7, wobei das Vinylesterurethanharz durch Umsetzung von di- und/oder höherfunktionellen Isocyanaten mit geeigneten Acrylverbindungen, gegebenenfalls unter Mitwirkung von Hydroxyverbindungen, die mindestens zwei Hydroxylgruppen enthalten, erhalten wird.

9. Reaktionsharz-Zusammensetzung nach einem der vorhergehenden Ansprüche, wobei die Epoxidgruppe des Epoxidharzes eine Glycidylethergruppe ist.

10. Reaktionsharz-Zusammensetzung nach einem der vorhergehenden Ansprüche, wobei das Härtungsmittel für die mindestens eine radikalisch härtbare Verbindung (b-1) mindestens ein Peroxid umfasst.

11. Reaktionsharz-Zusammensetzung nach Anspruch 10, wobei das Peroxid aus der Gruppe bestehend aus Hydroperoxiden, Perethern, Perestern, Peranhydriden und Percarbonaten ausgewählt ist.

12. Reaktionsharz-Zusammensetzung nach einem der vorhergehenden Ansprüche, wobei das mindestens eine Amin (b-2) aus der Gruppe bestehend aus aliphatischen Aminen, aliphatischen und araliphatischen Polyaminen ausgewählt ist.

13. Reaktionsharz-Zusammensetzung nach einem der vorhergehenden Ansprüche, wobei der Harzbestandteil (A) ferner mindestens einen Reaktivverdünner für die Verbindung (a-1) und/oder (a-2) enthält.

14. Reaktionsharz-Zusammensetzung nach Anspruch 13, wobei der Reaktiwerdünner für die Verbindung (a-1) in der Komponente (I) enthalten ist.

15. Reaktionsharz-Zusammensetzung nach Anspruch 13, wobei der Reaktivverdünner für die Verbindung (a-2) in der Komponente (II) enthalten ist

16. Reaktionsharz-Zusammensetzung nach einem der vorhergehenden Ansprüche, wobei der Harzbestandteil (A) ferner einen Beschleuniger für die Härtungsreaktion der mindestens einen Verbindung (a-1) und/oder für die Reaktion der mindestens einen Verbindung (a-2) mit einem Amin enthält.

17. Reaktionsharz-Zusammensetzung nach Anspruch 16, wobei der Beschleuniger jeweils in der Komponente (III) enthalten ist.

18. Reaktionsharz-Zusammensetzung nach einem der vorhergehenden Ansprüche, wobei der Harzbestandteil (A) ferner mindestens einen Stabilisator und gegebenenfalls mindestens einen Inhibitor enthält.

19. Reaktionsharz-Zusammensetzung nach Anspruch 18, wobei der mindestens eine Stabilisator und gegebenenfalls der mindestens eine Inhibitor in der Komponente (I) enthalten ist.

20. Reaktionsharz-Zusammensetzung nach einem der vorhergehenden Ansprüche, wobei mindestens eine der Komponenten (I), (II) oder (III) einen anorganischen Zuschlagstofif enthält.

21. Reaktionsharz-Zusammensetzung nach Anspruch 20, wobei der anorganische Füllstoff aus der Gruppe bestehend aus Quarz, Glas, Korund, Porzellan, Steingut, Leichtspat, Schwerspat, Gips, Talk, Kreide oder Gemischen davon, wobei die Füllstoffe in Form von Sand, Mehl, oder Formkörpern vorliegen können, ausgewählt ist.

22. Verwendung einer Reaktionsharz-Zusammensetzung nach einem der Ansprüche 1 bis 21 als Bindemittel, insbesondere zur chemischen Befestigung von Verankerungsmitteln in Bohrlöchern.

23. Verwendung einer Reaktionsharz-Zusammensetzung nach einem der Ansprüche 1 bis 21 zum baulichen Kleben.

## Claims

1. Reaction resin composition with a resin component (A), which contains at least one radically hardenable compound (a-1) and one epoxy resin (a-2), which on average comprises more than one epoxy group per molecule, and a hardener component (B), which contains a hardening agent for the at least one radical compound (b-1) and at least one amine (b-2), in which the compounds (a-1) and (b-1) as well as the compounds (a-2) and (b-2) are separated from each other spatially to inhibit reaction and in which the ratio of double bond value (number of moles of double bond groups or double bonds in 100 g of resin) to epoxy value (the number of moles of epoxy groups in 100 g of resin) of the resin component nDB:nEP is between 0.01 and 0.55 or between 5 and 50.

2. Reaction resin composition according to claim 1, in which the ratio of double bond value to epoxy value of the resin component nDB:nEP is between 0.01 and 0.30 or between 7 and 50.

3. Reaction resin composition according to claim 2, in which the ratio of double bond value to epoxy value of the resin component nDB:nEP is between 0.01 and 0.25 or between 10 and 50.

4. Reaction resin composition according to one of the previous claims, with the stipulation that the composition contains no Cu, Mn and iron compound and no bridging compound.

5. Reaction resin composition according to one of the previous claims, in which the compounds (a-1), (a-2), (b-1) and (b-2) are distributed over three components in such a way that a first component (I) contains the compound (a-1), a second component (II) contains the at least one epoxy resin (a-2) and the hardening agent (b-1) and a third component (III) contains the at least one amine (b-2), and the three components (I), (II) and (III) are separated from each other spatially to inhibit reaction.

6. Reaction resin composition according to one of the previous claims, in which at least one radically hardenable compound (a-1) is an unsaturated polyester resin, a vinyl ether resin, a vinyl ester resin and/or a vinyl ester urethane resin.

7. Reaction resin composition according to claim 6, in which the radically hardenable compound (a-1) is a vinyl ester urethane resin.

8. Reaction resin composition according to claim 7, in which the vinyl ester urethane resin is obtained by converting di and/or higher functional isocyanates with suitable acrylic compounds, if necessary with the assistance of hydroxy compounds, which contain at least two hydroxyl groups.

9. Reaction resin composition according to one of the previous claims, in which the epoxy group of the epoxy resin is a glycidyl ether group.

10. Reaction resin composition according to one of the previous claims, in which the hardening agent for the at least one radically hardenable compound (b-1) comprises at least one peroxide.

11. Reaction resin composition according to claim 10, in which the peroxide is selected from the group consisting of hydroperoxides, perethers, peresters, peranhydrides and percarbonates.

12. Reaction resin composition according to one of the previous claims, in which the at least one amine (b-2) is selected from the group consisting of aliphatic amines, aliphatic and araliphatic polyamines.

13. Reaction resin composition according to one of the previous claims, in which the resin component (A) also contains at least one reactive thinner for the compound (a-1) and/or (a-2).

14. Reaction resin composition according to claim 13, in which the reactive thinner for the compound (a-1) is contained in the component (I).

15. Reaction resin composition according to claim 13, in which the reactive thinner for the compound (a-2) is contained in the component (II).

16. Reaction resin composition according to one of the previous claims, in which the resin component (A) also contains an accelerator for the hardening reaction of the at least one compound (a-1) and/or for the reaction of the at least one compound (a-2) with an amine.

17. Reaction resin composition according to claim 16, in which the accelerator is contained in the component (III).

18. Reaction resin composition according to one of the previous claims, in which the resin component (A) also contains at least one stabiliser and if necessary at least one inhibitor.

19. Reaction resin composition according to claim 18, in which the at least one stabiliser and if necessary the at least one inhibitor is contained in the component (I).

20. Reaction resin composition according to one of the previous claims, in which at least one of the components (I), (II) or (III) contains an anorganic additive.

21. Reaction resin composition according to claim 20, in which the anorganic filler is selected from the group consisting of quartz, glass, corundum, porcelain, earthenware, light spar, heavy spar, gypsum, talcum, chalk or mixtures of them, in which the fillers may be in the form of sand, powder or moulded bodies.

22. Use of a reaction resin composition according to one of claims 1 to 21 as a binding agent, particularly for the chemical fixing of anchoring agents in holes.

23. Use of a reaction resin composition according to one of claims 1 to 21 for structural bonding.

## Revendications

1. Composition de résine réactive comprenant un constituant résine (A), qui contient au moins un composé durcissable par voie radicalaire (a-1) et une résine époxyde (a-2), qui comprend en moyenne plus d'un groupe époxyde par molécule, et un constituant durcisseur (B), qui contient un agent de durcissement pour ledit au moins un composé radicalaire (b-1) et au moins une amine (b-2), les composés (a-1) et (b-1), ainsi que les composés (a-2) et (b-2) étant respectivement séparés les uns des autres dans l'espace d'une manière inhibant la réaction, et le rapport entre l'indice de doubles liaisons (nombre de moles des groupes à double liaison ou de doubles liaisons dans 100 g de résine) et l'indice époxyde (nombre de moles de groupes époxyde dans 100 g de résine) du composant résine nDB:nEP étant compris entre 0,01 et 0,55 ou entre 5 et 50.

2. Composition de résine réactive selon la revendication 1, dans laquelle le rapport entre l'indice de doubles liaisons et l'indice époxyde du composant résine nDB:nEP est compris entre 0,01 et 0,30 ou entre 7 et 50.

3. Composition de résine réactive selon la revendication 2, dans laquelle le rapport entre l'indice de doubles liaisons et l'indice époxyde du composant résine nDB:nEP est compris entre 0,01 et 0,25 ou entre 10 et 50.

4. Composition de résine réactive selon l'une quelconque des revendications précédentes, à condition que la composition ne contienne pas de composé de Cu, Mn et de fer et pas de composé pontant.

5. Composition de résine réactive selon l'une quelconque des revendications précédentes, dans laquelle les composés (a-1), (a-2), (b-1) et (b-2) sont partagés en trois composants de sorte qu'un premier composant (I) contienne le composé (a-1), un deuxième composant (II) contienne ladite au moins une résine époxyde (a-2) et l'agent de durcissement (b-1), et un troisième composant (III) contienne ladite au moins une amine (b-2), et les trois composants (I), (II) et (III) sont séparés les uns des autres dans l'espace d'une manière inhibant la réaction.

6. Composition de résine réactive selon l'une quelconque des revendications précédentes, dans laquelle ledit au moins un composé durcissable par voie radicalaire (a-1) est une résine de polyester insaturée, une résine d'éther de vinyle, une résine d'ester de vinyle et/ou une résine d'ester de vinyle-uréthane.

7. Composition de résine réactive selon la revendication 6, dans laquelle le composé durcissable par voie radicalaire (a-1) est une résine d'ester vinyle-uréthane.

8. Composition de résine réactive selon la revendication 7, dans laquelle la résine d'ester de vinyle-uréthane est obtenue par mise en réaction d'isocyanates difonctionnels et/ou d'une fonctionnalité supérieure avec des composés acryliques appropriés, éventuellement avec action conjointe de composés hydroxy qui contiennent au moins deux groupes hydroxyle.

9. Composition de résine réactive selon l'une quelconque des revendications précédentes, dans laquelle le groupe époxyde de la résine époxyde est un groupe éther de glycidyle.

10. Composition de résine réactive selon l'une quelconque des revendications précédentes, dans laquelle l'agent de durcissement pour ledit au moins un composé durcissable par voie radicalaire (b-1) comprend au moins un peroxyde.

11. Composition de résine réactive selon la revendication 10, dans laquelle le peroxyde est choisi dans le groupe constitué par les hydroperoxydes, les peréthers, les peresters, les peranhydrides et les percarbonates.

12. Composition de résine réactive selon l'une quelconque des revendications précédentes, dans laquelle ladite au moins une amine (b-2) est choisie dans le groupe constitué par les amines aliphatiques, les polyamines aliphatiques et araliphatiques.

13. Composition de résine réactive selon l'une quelconque des revendications précédentes, dans laquelle le constituant résine (A) contient en outre au moins un diluant réactif pour le composé (a-1) et/ou (a-2).

14. Composition de résine réactive selon la revendication 13, dans laquelle le diluant réactif pour le composé (a-1) est contenu dans le composant (I).

15. Composition de résine réactive selon la revendication 13, dans laquelle le diluant réactif pour le composé (a-2) est contenu dans le composant (II).

16. Composition de résine réactive selon l'une quelconque des revendications précédentes, dans laquelle le constituant résine (A) contient en outre un accélérateur pour la réaction de durcissement dudit au moins un composé (a-1) et/ou pour la réaction dudit au moins un composé (a-2) avec une amine.

17. Composition de résine réactive selon la revendication 16, dans laquelle l'accélérateur est à chaque fois contenu dans le composant (III).

18. Composition de résine réactive selon l'une quelconque des revendications précédentes, dans laquelle le constituant résine (A) contient en outre au moins un stabilisateur et éventuellement au moins un inhibiteur.

19. Composition de résine réactive selon la revendication 18, dans laquelle ledit au moins un stabilisateur et éventuellement ledit au moins un inhibiteur est contenu dans le composant (I).

20. Composition de résine réactive selon l'une quelconque des revendications précédentes, dans laquelle au moins un des composants (I), (II) ou (III) contient un additif inorganique.

21. Composition de résine réactive selon la revendication 20, dans laquelle la charge inorganique est choisie dans le groupe constitué par le quartz, le verre, le corindon, la porcelaine, la faïence, le spath léger, le spath pesant, le gypse, le talc, la craie ou leurs mélanges, les charges pouvant se présenter sous la forme de sable, de farine ou de corps moulés.

22. Utilisation d'une composition de résine réactive selon l'une quelconque des revendications 1 à 21 en tant que liant, notamment pour la fixation chimique d'agents d'ancrage dans des trous de forage.

23. Utilisation d'une composition de résine réactive selon l'une quelconque des revendications 1 à 21 pour le collage structural.
